(19) Europäisches Patentamt
European Patent Office
Office européen des brevets

(11) **EP 1 930 868 B1**

(12) **EUROPEAN PATENT SPECIFICATION**

(45) Date of publication and mention
of the grant of the patent:
**22.02.2012 Bulletin 2012/08**

(51) Int Cl.:
*G09G 3/34* (2006.01)          *H04M 1/22* (2006.01)
*H04N 1/60* (2006.01)

(21) Application number: **07111959.8**

(22) Date of filing: **06.07.2007**

(54) **Image display device, and method for adjusting light source thereof**

Bildanzeigevorrichtung und Verfahren zur Anpassung von dessen Lichtquelle

Dispositif d'affichage d'images, et procédé de réglage de source lumineuse associée

(84) Designated Contracting States:
**DE GB NL**

(30) Priority: **05.12.2006 KR 20060122138**

(43) Date of publication of application:
**11.06.2008 Bulletin 2008/24**

(73) Proprietor: **Samsung Electronics Co., Ltd.
Suwon-si, Gyeonggi-do (KR)**

(72) Inventors:
• **Choi, Won-yong
Seoul (KR)**
• **Kim, Young-kook
Gyeonggi-do (KR)**
• **Kim, Tae-jin
Gyeonggi-do (KR)**

(74) Representative: **D'Halleweyn, Nele Veerle Trees
Gertrudis et al
Arnold & Siedsma
Sweelinckplein 1
2517 GK The Hague (NL)**

(56) References cited:
**WO-A-02/37454          WO-A-02/097782
US-A1- 2002 180 999     US-A1- 2006 056 178
US-A1- 2006 226 956**

**Description**

BACKGROUND OF THE INVENTION

Devices and methods consistent with the present invention relate to a user terminal, an image display device, and a method for adjusting a light source thereof, and more particularly, to a user terminal, an image display device, and a method for adjusting a light source thereof, in which an ambient light is reflected in adjusting an internal light source of a backlight unit.

WO 02/37454 discloses a method and apparatus for illuminating an object with white light. US 2006/0226956 discloses a system comprising a plurality of LEDs which can consistently provide a desired color output.

A cathode ray tube (CRT), which is a widely-used type of display device, has been typically employed in terminals, as well as televisions (TVs) and other devices. The CRT, however, does not allow electronic products to be small and light because of its weight and size.

For replacement of such a CRT, a Liquid Crystal Display (LCD) has been developed. The liquid crystal display device is small and light and consumes less power than a CRT.

The liquid crystal display device is being developed as a display device for replacing the CRT because it is compact and low-voltage driven and consumes less power. In particular, a thin film transistor liquid crystal display device has a high image quality, a large screen, and a color reproducing capability which is comparable to the CRT. Accordingly, in recent years, the liquid crystal display device has been widely used for several applications.

The liquid crystal display device itself cannot emit light, unlike a CRT, and thus must include a light unit which emits a light for visually representing an image.

LCDs often use backlight units including a Light Emitting Diode (LED) as a light source. A liquid crystal display device employing such an LED backlight unit is capable of representing a wide range of colors.

However, a liquid crystal display device employing an LED backlight unit cannot represent actual colors because its correlation color temperature characteristic has different color temperatures. For example, when a user views photographed images or other images on the liquid crystal display device, the colors are different.

In other words, colors of images on the liquid crystal display device vary based on the ambient illumination around the user and the liquid crystal display device, e.g., with a solar light, a fluorescent lamp, and a glow lamp.

SUMMARY OF THE INVENTION

The present invention provides an image display system, and a method for adjusting a light source thereof, in which a light source of a backlight unit can be adjusted based on a luminance determined according to ambient light and according to the light source, the system having the features of claim 1 and the method having the features of claim 5.

According to an aspect of the present invention, there is provided a user terminal connected with an image display device, comprising: a first interface unit which receives a color coordinate of ambient light; a second interface unit which receives a color coordinate of an internal light source of the image display device; and a control unit which calculates a luminance value from the received color coordinate of the ambient light and the received color coordinate of the internal light source, and transmits the calculated luminance value to the image display device via the second interface unit in order to adjust the internal light source of the image display device.

In an exemplary implementation, the color coordinate of the ambient light may be received from an optical measuring device which measures a luminance of the ambient light.

In an exemplary implementation, the first control unit may calculate the luminance value using the following equation:

$$xw = \frac{X_r + X_g + X_b}{X_r + X_g + X_b + Y_r + Y_g + Y_b + Z_r + Z_g + Z_b}$$

$$yw = \frac{Yw}{X_r + X_g + X_b + Y_r + Y_g + Y_b + Z_r + Z_g + Z_b}$$

$$X'_{r,g,b} = \frac{x_{r,g,b} Y_{r,g,b}}{y_{r,g,b}}$$

$$Y'_{r,g,b} = Y_{r,g,b}$$

$$Z_{r,g,b} = \frac{(1 - x_{r,g,b} - y_{r,g,b}) Y_{r,g,b}}{y_{r,g,b}}$$

where xw and yw indicate a measured color coordinate of the ambient light, $x_{r,g,b}$ and $y_{r,g,b}$ indicate the color coordinate of the internal light source for R, G, and B, $Y_{r,g,b}$ indicates luminance for R, G, and B, and X, Y, Z are basic calculation functions used in most of the colorimeters.

In accordance with another aspect of the present invention, there is provided an image display device comprising: a backlight unit comprising an internal light source which emits light, and a light-source sensor which measures a luminance and color coordinate of the internal light source; a light-source measuring unit which measures a color coordinate of ambient light; and a control unit which calculates a luminance value from the color coordinate of the internal light source and the color coordinate of the ambient light, and controls the backlight unit so that the luminance value of the internal light source becomes approximately equal to the calculated luminance value.

In an exemplary implementation, the third control unit may calculate the luminance value using the following equation:

$$xw = \frac{X_r + X_g + X_b}{X_r + X_g + X_b + Y_r + Y_g + Y_b + Z_r + Z_g + Z_b}$$

$$yw = \frac{Yw}{X_r + X_g + X_b + Y_r + Y_g + Y_b + Z_r + Z_g + Z_b}$$

$$X_{r,g,b} = \frac{x_{r,g,b} Y_{r,g,b}}{y_{r,g,b}}$$

$$Y_{r,g,b} = Y_{r,g,b}$$

$$Z_{r,g,b} = \frac{(1 - x_{r,g,b} - y_{r,g,b}) Y_{r,g,b}}{y_{r,g,b}}$$

where xw and yw indicate a measured color coordinate of the ambient light, $x_{r,g,b}$ and $y_{r,g,b}$ indicate the color coordinate of the internal light source for R, G, and B, $Y_{r,g,b}$ indicates luminance for R, G, and B, and X, Y, Z are basic calculation functions used in most of the colorimeters.

In an exemplary implementation, after calculating the luminance value, the control unit may adjust a driving frequency of the backlight unit, control the light-source sensor to measure the luminance value, and compare the calculated luminance value with the measured luminance value.

In an exemplary implementation, the third control unit may adjust the driving frequency of the backlight unit until the luminance value measured by the light-source sensor approximates the calculated luminance value.

In accordance with another aspect of the present invention, there is provided a method for adjusting a light source of an image display device, the method comprising: receiving a color coordinate of an ambient light; receiving a color coordinate of an internal light source of the image display device; calculating a luminance value based on the received color coordinate of the ambient light and the received color coordinate of the internal light source; and transmitting the calculated luminance value to the image display device in order to adjust the internal light source of the image display device based on the calculated luminance value.

In an exemplary implementation, receiving the color coordinate of the ambient light may comprise receiving the color coordinate of the ambient light from an optical measuring device which measures the luminance of the ambient light.

In an exemplary implementation, calculating a luminance value may comprise calculating the luminance value using the following equation:

$$xw = \frac{X_r + X_g + X_b}{X_r + X_g + X_b + Y_r + Y_g + Y_b + Z_r + Z_g + Z_b}$$

$$yw = \frac{Yw}{X_r + X_g + X_b + Y_r + Y_g + Y_b + Z_r + Z_g + Z_b}$$

$$X_{r,g,b} = \frac{x_{r,g,b} Y_{r,g,b}}{y_{r,g,b}}$$

$$Y_{r,g,b} = Y_{r,g,b}$$

$$Z_{r,g,b} = \frac{(1 - x_{r,g,b} - y_{r,g,b}) Y_{r,g,b}}{y_{r,g,b}},$$

where xw and yw indicate a measured color coordinate of the ambient light, $x_{r,g,b}$ and $y_{r,g,b}$ indicate the color coordinate of the internal light source for R, G, and B, $Y_{r,g,b}$ indicates luminance for R, G, and B, and X, Y, Z are basic calculation functions used in most of the colorimeters.

In accordance with another aspect of the present invention, there is provided a method for adjusting a light source of an image display device, the method comprising: determining a color coordinate of ambient light; determining a color coordinate of an internal light source of the image display device; calculating a luminance value based on the color coordinate of the ambient light and the color coordinate of the internal light source; and adjusting the internal light source of the image display device based on the calculated luminance value.

In an exemplary implementation, adjusting the internal light source comprises adjusting the internal light source so that the luminance value of the internal light source is approximately equal to the calculated luminance value.

In an exemplary implementation, calculating a luminance value may comprise calculating the luminance value using the following equation:

$$xw = \frac{X_r + X_g + X_b}{X_r + X_g + X_b + Y_r + Y_g + Y_b + Z_r + Z_g + Z_b}$$

$$yw = \frac{Yw}{X_r + X_g + X_b + Y_r + Y_g + Y_b + Z_r + Z_g + Z_b}$$

$$X_{r,g,b} = \frac{x_{r,g,b} Y_{r,g,b}}{y_{r,g,b}}$$

$$Y_{r,g,b} = Y_{r,g,b}$$

$$Z_{r,g,b} = \frac{(1 - x_{r,g,b} - y_{r,g,b}) Y_{r,g,b}}{y_{r,g,b}}$$

where xw and yw indicate a measured color coordinate of the ambient light, $x_{r,g,b}$ and $y_{r,g,b}$ indicate the color coordinate of the internal light source for R,G, B, and $Y_{r,g,b}$ indicates luminance for R,G, and B, and X, Y, Z are basic calculation functions used in most of the colorimeters.

In an exemplary implementation, adjusting the internal light source may comprise: adjusting a driving frequency of a backlight unit comprising the internal light source, measuring the luminance value of the internal light source after adjusting the driving frequency of the backlight unit, comparing the measured luminance value with the calculated luminance value, and re-adjusting the driving frequency of the backlight unit until the measured luminance value of the internal light source is approximately equal to the calculated luminance value.

In an exemplary implementation, determining the color coordinate of ambient light comprises measuring a color component of ambient light at a user terminal; the determining the color coordinate of the internal light source comprises measuring the color coordinate of the internal light source at the image display device and transmitting the measured color coordinate of the internal light source to the user terminal; and calculating the luminance value comprises calculating the luminance value at the user terminal and transmitting the luminance value to the image display device.

In accordance with another aspect of the present invention, an image display system comprises: a backlight unit comprising an internal light source and a light-source sensor which measures a color coordinate of the internal light source; an optical measuring unit which measures a color coordinate of ambient light; a first control unit which calculates a luminance value based on the color coordinate of the internal light source and the color coordinate of the ambient light; and a second control unit which adjusts the internal light source based on the calculated luminance value.

BRIEF DESCRIPTION OF THE DRAWINGS

The above and other aspects of the present invention will be more apparent from the following detailed description of exemplary embodiments of the present invention with reference to the accompanying drawings, in which:

FIG. 1 is a block diagram illustrating a light-source adjusting system according to an exemplary embodiment of the present invention;

FIG. 2 is a block diagram illustrating an image display device according to an exemplary embodiment of the present invention;

FIG. 3 is a flowchart illustrating a method for adjusting a light source in the user terminal shown in FIG. 1;

FIG. 4 is a flowchart illustrating an example of a method for adjusting a light source in the image display device shown in FIG. 1;

FIG. 5 is a flowchart illustrating another example of a method for adjusting a light source in the image display device shown in FIG. 1;

FIG. 6 is a flowchart illustrating an example of a method for adjusting a light source in the image display device shown in FIG. 2; and

FIG. 7 is a flowchart illustrating another example of a method for adjusting a light source in the image display device shown in FIG. 2.

DETAILED DESCRIPTION OF THE EXEMPLARY EMBODIMENTS

Hereinafter, exemplary embodiments of the present invention will be described in detail with reference to the accompanying drawings.

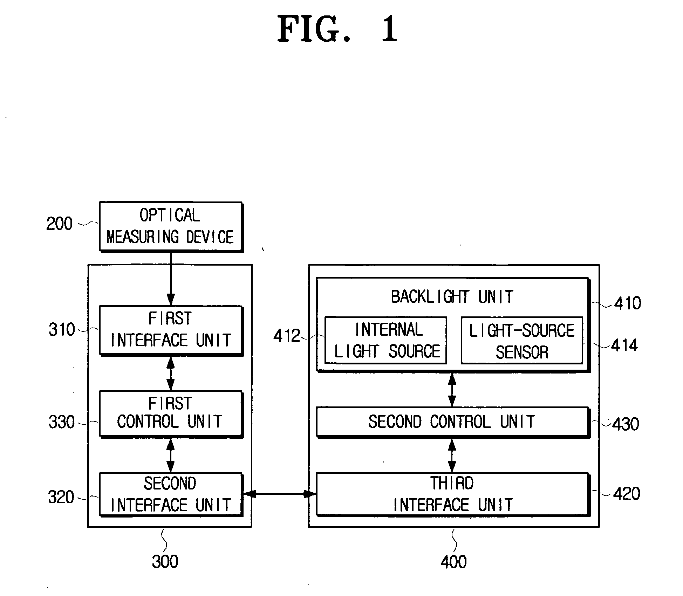

FIG. 1 is a block diagram illustrating a light-source adjusting system according to an exemplary embodiment of the present invention.

Referring to FIG. 1, the light-source adjusting system according to an exemplary embodiment of the present invention includes an optical measuring device 200, a user terminal 300, and an image display device 400. The optical measuring device 200 and the image display device 400 are connected to the user terminal 300 via a cable.

The optical measuring device 200 measures luminance of ambient light, and converts the measured luminance into a numerical value to output it as a color coordinate. Outputting a color coordinate dependent on the luminance in the optical measuring device 200 is well known, and accordingly, a detailed description thereof will be omitted.

The optical measuring device 200 sends the color coordinate to the user terminal 300. The color coordinate of the ambient light output from the optical measuring device 200 includes an x-axis coordinate value and an y-axis coordinate value.

The optical measuring device 200 may be a typical colorimeter. The ambient light collectively refers to light sources, including solar light, fluorescent lamps, and glow lamps around the optical measuring device 200, the user terminal 300, and the image display device 400.

The user terminal 300 is connected to the optical measuring device 200 which receives the luminance and the color coordinate of the ambient light from the optical measuring device 200. The user terminal 300 is connected to the image display device 400 which receives a color coordinate of the internal light source from the image display device 400.

In this embodiment, the user terminal 300 includes a first interface unit 310, a second interface unit 320, and a first control unit 330. The user terminal 300 may be a typical computer.

The first interface unit 310 supports an interface between the optical measuring device 200 and the user terminal 300. In this embodiment, the first interface unit 310 receives the color coordinate and luminance of the ambient light from the optical measuring device 200.

The second interface unit 320 supports an interface between the image display device 400 and the user terminal 300. In this embodiment, the second interface unit 320 receives the color coordinate of the internal light source from the image display device 400, and sends the luminance value calculated by the first control unit 330 to the image display device 400 under control of the first control unit 330.

The first control unit 330 controls a general function of the user terminal 300 and a signal communication between the first interface unit 310 and the second interface unit 320.

The first control unit 330 calculates the luminance from the color coordinate input via the first interface unit 310 and the color coordinate of the internal light source input via the second interface unit 320. The first control unit 330 may use a conversion formula typically used in chromatology, as shown in Equation 1:

$$X = \frac{xY}{y}$$

$$Y = Y$$

$$Z = \frac{(1-x-y)Y}{y}$$

$$xw = \frac{Xw}{Xw + Yw + Zw}$$

$$yw = \frac{Yw}{Xw + Yw + Zw}$$

$$Xw = X_r + X_g + X_b$$

$$Yw = Y_r + Y_g + Y_b$$

$$Zw = Z_r + Z_g + Z_b$$

where xw, yw, and Yw indicate an x-axis coordinate x, an y-axis coordinate y, and a luminance Y of mixed white, respectively, an x-axis coordinate x, an y-axis coordinate y, and a luminance Y of R, G, and B irradiated by the internal light source 412 are $(x_r, y_r, Y_r)$, $(x_g, y_g, Y_g)$, and $(x_b, y_b, Y_b)$, respectively, and X, Y, Z are basic calculation functions used in most of the colorimeters.

Equation 2 may be obtained using Equation 1:

## Equation 2

$$xw = \frac{X_r + X_g + X_b}{X_r + X_g + X_b + Y_r + Y_g + Y_b + Z_r + Z_g + Z_b}$$

$$yw = \frac{Yw}{X_r + X_g + X_b + Y_r + Y_g + Y_b + Z_r + Z_g + Z_b}$$

$$X_{r,g,b} = \frac{x_{r,g,b} Y_{r,g,b}}{y_{r,g,b}}$$

$$Y_{r,g,b} = Y_{r,g,b}$$

$$Z_{r,g,b} = \frac{(1 - x_{r,g,b} - y_{r,g,b})Y_{r,g,b}}{y_{r,g,b}}$$

The first control unit 330 may calculate a luminance value from the color coordinate of the ambient light and the color coordinate of the internal light source 412, using Equation 2. Additionally, the first control unit 330 controls to send the calculated luminance value to the image display device 400 via the second interface unit 320.

A method in which the first control unit 330 calculates the luminance value using Equation 2 will be described by way of example. It is assumed that in the ambient light, color temperature=6500K, xw=0.3127, and yw=0.329, and in the internal light source 412 of the image display device 400, color coordinates (x,y) are R(0.692, 0.299), G(0.204, 0.703), and B(0.148, 0.08), and Yw=250cd/m$^2$. By applying these values to Equation 2, Equation 3 is obtained:

Equation 3

$$xw = \frac{\dfrac{0.692 \times Y_r}{0.299} + \dfrac{0.204 \times Y_g}{0.703} + \dfrac{0.148 \times Y_b}{0.08}}{\dfrac{0.692 \times Y_r}{0.299} + \dfrac{0.204 \times Y_g}{0.703} + \dfrac{0.148 \times Y_b}{0.08} + Y_r + Y_g + Y_b + \dfrac{(1-0.692-0.299) \times Y_r}{0.299} + \dfrac{(1-0.204-0.703) \times Y_g}{0.703} + \dfrac{(1-0.148-0.08) \times Y_b}{0.08}}$$

$$0.3127 = \frac{\dfrac{0.692 \times Y_r}{0.299} + \dfrac{0.204 \times Y_g}{0.703} + \dfrac{0.148 \times Y_b}{0.08}}{\dfrac{Y_r}{0.299} + \dfrac{Y_g}{0.703} + \dfrac{Y_b}{0.08}}$$

$$0.329 = \frac{250}{\dfrac{Y_r}{0.299} + \dfrac{Y_g}{0.703} + \dfrac{Y_b}{0.08}}$$

To calculate the luminance, Equation 3 is developed into Equation 4.

Equation 4

$$1.26Y_r - 0.15Y_g - 2.05Y_b = 0$$

$$Y_r + Y_g + Y_b = 250$$

$$1.1Y_r + 0.47Y_g + 4.11Y_b = 250$$

By solving Equation 4, it is calculated that $Y_r$=61.68, $Y_g$=162.48, and $Y_b$=25.84, which are a ratio of R, G, and B constituting the white. In deriving Equation 4, Yw is 250cd/m$^2$.

The first control unit 330 calculates R, G, and B luminance values $Y_r$, $Y_g$, and $Y_b$ using Equations 1 to 4, and sends the calculation result to the image display device 400 via the second interface unit 320.

Although not shown in FIG. 1, the user terminal 300 may be interfaced with a user. Accordingly, upon receipt of a request signal to adjust the light source from the user, the first control unit 330 requests the optical measuring device 200 to measure the ambient light and the image display device 400 to measure the internal light source 412. The first control unit 330 may then calculate R, G, and B luminance values using Equation 2 and provide them to the image display device 400.

As such, the light source is adjusted in response to the request from the user made using the user interface function of the user terminal 300, which makes it possible to alter the light source of the backlight unit 410 to emulate a light source desired by the user.

The image display device 400 includes a backlight unit 410, a third interface unit 420, and a second control unit 430.

The backlight unit 410 includes the internal light source 412 and a light-source sensor 414. Since the LCD itself cannot emit light, the internal light source 412 irradiates an LCD panel with light. The internal light source 412 may use a light emitting diode (LED). If a plurality of LEDs are used as the internal light source 412, each LED may be separately controlled. The light-source sensor 414 may measure a color coordinate and luminance of the internal light source 412.

The third interface unit 420 supports an interface between the user terminal 300 and the image display device 400. In this embodiment, the third interface unit 420 receives the luminance value from the user terminal 300. The luminance value received from the user terminal 300 is one calculated by reflecting the color coordinates of the ambient light and the internal light source 412 in the first control unit 330.

The second control unit 430 controls a general function of the image display device 400, and controls a signal communication between the backlight unit 410 and the third interface unit 420.

The second control unit 430 controls the backlight unit 410 so that the luminance value received from the user terminal 300 via the third interface unit 420 approximately becomes the luminance value of the backlight unit 410 in the internal light source 412.

In an exemplary implementation, the second control unit 430 adjusts the luminance value of the internal light source 412 in the backlight unit 410 to match the luminance value received from the user terminal 300. However, it is difficult to completely match the two luminance values. Accordingly, the second control unit 430 controls the backlight unit 410 so that the two luminance values approximate each other. To control the backlight unit 410 so that the two luminance values approximate each other, it is desirable to set an approximation range in advance.

In this case, the second control unit 430 adjusts a Pulse Width Modulation (PWM) driving frequency of the backlight unit 410, controls the light-source sensor 414 to measure the luminance of the internal light source 412, and compares the luminance value received from the user terminal 300 with the luminance value of the internal light source 412.

The second control unit 430 repeatedly adjusts the PWM driving frequency of the backlight unit 410 until the luminance of the internal light source 412 is approximately the calculated luminance value from the user terminal 300, and then compares the luminance value of the internal light source 412 with the received luminance value.

In the present embodiment, it is assumed that an adjustment amount of the PWM driving frequency of the internal light source 412 required for increasing the luminance of the internal light source 412 in the backlight unit 410 by 1cd/m$^2$ has been measured and set in advance. That is, the second control unit 430 adjusts the PWM driving frequency so that the luminance increases by 1cd/m$^2$ each time the second control unit 430 adjusts the PWM driving frequency.

If the internal light source 412 which irradiates the LCD panel with light consists of a plurality of LEDs, the second control unit 430 may control the plurality of LEDs to be partially operated if necessary.

The user terminal 300 of the light-source adjusting system shown in FIG. 1 may be a typical computer, and the image display device 400 may be a monitor connected to the computer. Typically, since the monitor connected to the computer has no calculation capability, the computer, i.e., the user terminal 300 may perform a calculation process.

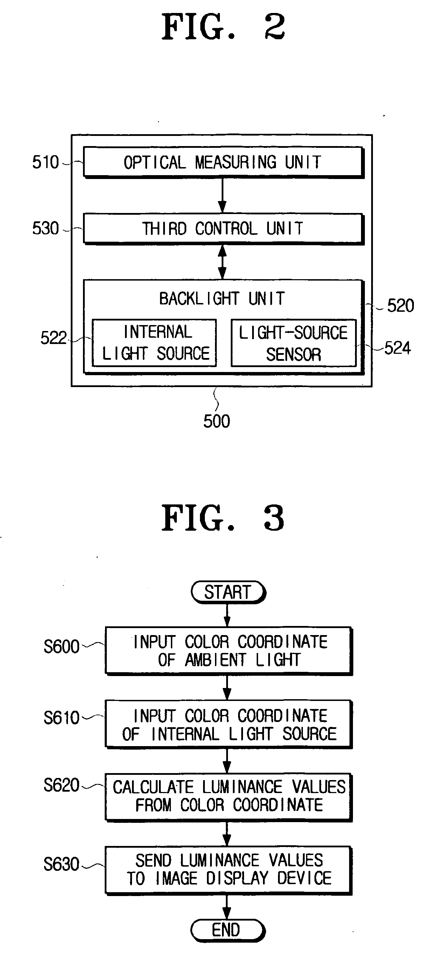

FIG. 2 is a block diagram illustrating an image display device according to an exemplary embodiment of the present invention.

The image display device 400 shown in FIG. 1 may be a typical monitor connected the user terminal 300, e.g., a personal computer (PC), while an image display device 500 shown in FIG. 2 may be a digital TV having calculation capability. Accordingly, different reference numerals are used to refer to the image display device 400 of FIG. 1 and the image display device 500 of FIG. 2.

Referring to FIG. 2, the image display device 500 according to an exemplary embodiment of the present invention includes an optical measuring unit 510, a backlight unit 520, and a third control unit 530.

The optical measuring unit 510 measures the luminance and color coordinate of the ambient light. In the present embodiment, the optical measuring unit 510 is shown as being included in the image display device 500, but may be external to the image display device 500.

The backlight unit 520 includes an internal light source 522 and a light-source sensor 524. The backlight unit 520 has the same function as the backlight unit 410 of the image display device 400 shown in FIG. 1. Therefore, explanation of the function of the backlight unit 520 will be omitted for the sake of brevity.

The third control unit 530 controls a general function of the image display device 500 and controls a signal communication between the backlight unit 520 and the optical measuring unit 510.

The third control unit 530 calculates R, G, and B luminance values ($Y_r$, $Y_g$, and $Y_b$) from the color coordinate of the ambient light measured by the optical measuring unit 510 and a color coordinate of the internal light source 522 measured by the light-source sensor 524. The third control unit 530 may use Equation 2 to calculate the luminance values.

Although not shown in FIG. 2, the image display device 500 may interface with a user. Accordingly, upon receipt of a request signal to adjust the light source from the user, the third control unit 530 may control the optical measuring unit 510 to measure the ambient light and the light-source sensor 524 to measure the internal light source 522. The third control unit 530 may then calculate the R, G, and B luminance values using Equation 2 to adjust the light source of the backlight unit 520.

As such, the light source is adjusted in response to the request from the user made using the user interface function of the user terminal 500, which makes it possible to alter the light source of the backlight unit 520 to emulate the light source desired by the user.

FIG. 3 is a flowchart illustrating a method for adjusting a light source in the user terminal shown in FIG. 1.

The optical measuring device 200 measures the color coordinate and luminance of the ambient light, and the user terminal 300 receives the color coordinate and luminance of the ambient light from the optical measuring device 200 (S600).

In the image display device 400, the second control unit 430 controls the light-source sensor 414 to measure the color coordinate of the internal light source 412, and sends the color coordinate of the internal light source 412 measured by the light-source sensor 414 to the user terminal 300 via the third interface unit 420. The user terminal 300 receives the color coordinate of the internal light source 412 via the second interface unit 320 (S610).

In the user terminal 300, the first control unit 330 calculates R, G, and B luminance values from the color coordinate of the ambient light received from the optical measuring device 200 via the first interface unit 310 and the color coordinate of the internal light source 412 received from the image display device 400 via the second interface unit 320, using Equation 2 (S620).

After calculating the R, G, and B luminance values, the first control unit 330 of the user terminal 300 sends the calculated luminance values to the image display device 400 via the second interface unit 320. The image display device 400 adjusts the internal light source 412 of the backlight unit 410 using the R, G, and B luminance values received from the user terminal 300 (S630).

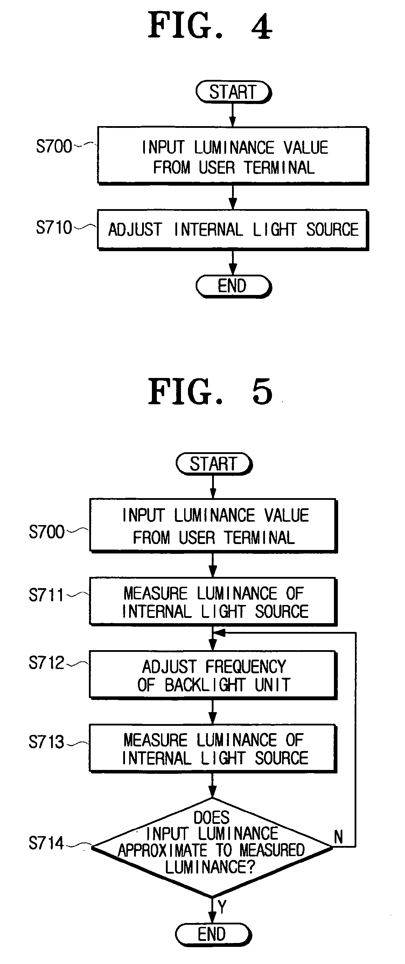

FIG. 4 is a flowchart illustrating an exemplary method for adjusting the light source in the image display device shown in FIG. 1.

The image display device 400 receives the R, G, and B luminance values from the user terminal 300 via the third interface unit 420. The R, G, and B luminance values, which are sent from user terminal 300 to the image display device 400, are calculated from ambient light and a color coordinate of the internal light source 412 by the first control unit 330 (S700).

To adjust the internal light source 412, the image display device 400 adjusts the PWM driving frequency so that the luminance value of the backlight unit 410 in the internal light source 412 becomes approximately the same as the luminance value received from the user terminal 300 (S710).

FIG. 5 is a flowchart illustrating another exemplary method for adjusting the light source in the image display device shown in FIG. 1. In FIG. 5, a variant of the method for adjusting the light source in the image display device 400 in FIG. 4 is shown in greater detail, in which operation S700 is labeled by the same reference number as that of FIG. 4 because both operations are the same.

The image display device 400 receives the luminance value from the user terminal 300 via the third interface unit 420. The luminance value sent from the user terminal 300 to the image display device 400 is calculated from the color coordinates of the ambient light and the internal light source 412 by the first control unit 330 (S700).

The second control unit 430 controls the light-source sensor 414 to measure a current luminance of the internal light source 412 (S711), and adjusts the PWM driving frequency of the backlight unit 410 (S712).

After adjusting the PWM driving frequency of the backlight unit 410, the second control unit 430 controls the light-source sensor 414 to measure current luminance of the internal light source 412 whose PWM driving frequency has been adjusted (S713).

The second control unit 430 compares the luminance input from the user terminal 300 with the luminance measured by the light-source sensor 414, and stops the light source adjustment if the two luminance values approximate each other (Yes in S714).

If the luminance input from the user terminal 300 is not approximately the same as the luminance measured by the light-source sensor 41 (No in S714), the second control unit 430 returns to the operation S712, in which the PWM driving frequency of the backlight unit 410 is adjusted.

In this case, the second control unit 430 may increase the PWM driving frequency so that the luminance of the internal light source 412 in the backlight unit 410 increases by $1cd/m^2$ each time the second control unit 430 performs operation S712.

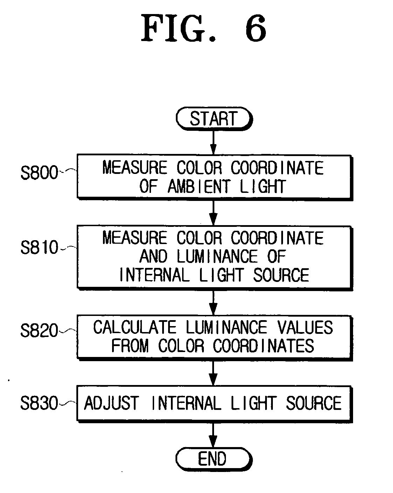

FIG. 6 is a flowchart illustrating an exemplary method for adjusting the light source in the image display device shown in FIG. 2.

In the image display device 500, the optical measuring unit 510 measures the color coordinate and luminance of the ambient light (S800), and the backlight unit 520 measures the color coordinate and luminance of the internal light source 522 using the light-source sensor 524 (S810).

The third control unit 530 calculates the R, G, and B luminance values from the color coordinate of the ambient light measured by the optical measuring unit 510 and the color coordinate of the internal light source 522 measured by the light-source sensor 524, using Equation 2 (S820).

The third control unit 530 calculates the R, G, and B luminance values reflecting the color coordinates of the ambient light and the internal light source 522, and adjusts the luminance of the internal light source 522 to approximate

**EP 1 930 868 B1**

the calculated luminance. The adjustment of the luminance of the internal light source 522 may be made by adjusting the PWM driving frequency supplied to the backlight unit 520 (S830).

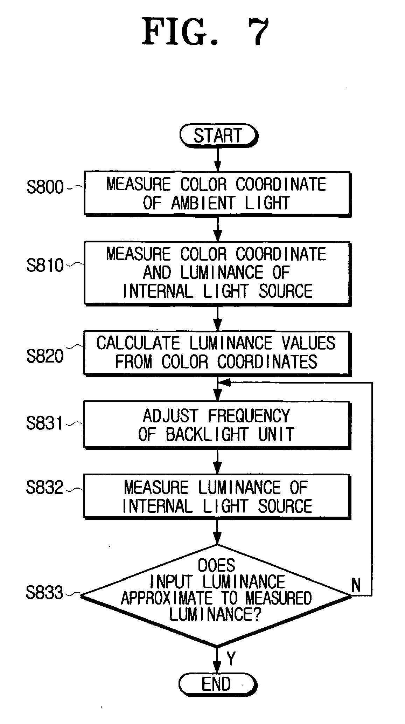

FIG. 7 is a flowchart illustrating another exemplary method for adjusting the light source in the image display device shown in FIG. 2. In FIG. 7, a variant of the method for adjusting the light source of the image display device 500 in FIG. 6 is shown in greater detail. Operations 5800 to 5820 are labeled by the same reference numbers as those of FIG. 6 because they are the same.

In the image display device 500, the optical measuring unit 510 measures the color coordinate and luminance of the ambient light (S800), and the backlight unit 520 measures the color coordinate and luminance of the internal light source 522 using the light-source sensor 524 (S810).

The third control unit 530 calculates the R,G,B luminance values from the color coordinate of the ambient light measured by the optical measuring unit 510 and the color coordinate of the internal light source 522 measured by the light-source sensor 524, using Equation 2 (S820).

The third control unit 530 adjusts the PWM driving frequency of the backlight unit 520 (S831) and then measures the luminance of the internal light source 522 in the backlight unit 520 using the light-source sensor 524 (S832).

The third control unit 530 compares the luminance of the internal light source 522 measured by the light-source sensor 524 following the PWM driving frequency adjustment with the luminance calculated in step S820 to determine whether the two luminance values approximate each other.

If it is determined that the two luminance values approximate each other (Yes in S833), the third control unit 530 terminates the light source adjustment. If it is determined that the two luminance values do not approximate each other (No in S833), the process proceeds to step S831, in which the PWM driving frequency of the backlight unit is again adjusted.

As a result, the image display device 500, such as a digital TV having calculation capability, can adjust the light source of the backlight unit 520 using the color coordinates of the ambient light and the internal light source 522.

The image display device 400, such as a monitor having no calculation capability, can receive the R, G, and B luminance values, calculated using the color coordinates of the ambient light and the internal light source 412, from the user terminal 300 having a fast calculation capability, to adjust the light source of the backlight unit 410.

As described above, with the user terminal, the image display device, and the exemplary methods for adjusting the light source thereof according to the present invention, the ambient light is reflected in an adjustment of the light source of the backlight unit, thereby providing a desired light source related to a color-temperature difference in the display device panel.

The light source of the LED backlight unit can be arbitrarily adjusted around the light source desired by the user in order to emulate the light source desired by the user, and the color temperature can be precisely adjusted without distorting a video signal, thereby preventing degradation of image quality.

The foregoing embodiments and advantages are merely exemplary and are not to be construed as limiting the present invention. The present teachings can be readily applied to other types of apparatuses. Also, the description of the embodiments of the present invention is intended to be illustrative, and not to limit the scope of the claims, and many alternatives, modifications, and variations will be apparent to those skilled in the art.

**Claims**

1. An image display system comprising:

    a backlight unit (410; 520) comprising an internal light source (412; 522) with a plurality of separately controllable LEDs and a light-source sensor (414; 524) adapted to measure an x-axis coordinate and y-axis coordinate for R, G, B of the internal light source, using the linear xyY color space coordinate system;
    an optical measuring unit (200; 510) adapted to measure an x-axis and y-axis coordinate and a luminance value of ambient light, using the linear xyY color space coordinate system;
    a first control unit (330; 530) adapted to calculate luminance values for R, G, B based on the x and y-axis coordinates for R, Q, B of the internal light source, the x and y-axis coordinates of the ambient light and the luminance of the ambient light; and
    a second control unit (430; 530) adapted to adjust the internal light source based on the calculated luminance values for R, G, B; such that the ambient light is reflected in an adjustment of the internal light source;
    wherein the first control unit is adapted to calculate the luminance values using the following equations:

$$xw = \frac{\dfrac{x_r Y_r}{y_r} + \dfrac{x_g Y_g}{y_g} + \dfrac{x_b Y_b}{y_b}}{\dfrac{x_r Y_r}{y_r} + \dfrac{x_g Y_g}{y_g} + \dfrac{x_b Y_b}{y_b} + Y_r + Y_g + Y_b + \dfrac{(1 - x_r - y_r)Y_r}{y_r} + \dfrac{(1 - x_g - y_g)Y_g}{y_g} + \dfrac{(1 - x_b - y_b)Y_b}{y_b}}$$

$$yw = \frac{Yw}{\dfrac{x_r Y_r}{y_r} + \dfrac{x_g Y_g}{y_g} + \dfrac{x_b Y_b}{y_b} + Y_r + Y_g + Y_b + \dfrac{(1 - x_r - y_r)Y_r}{y_r} + \dfrac{(1 - x_g - y_g)Y_g}{y_g} + \dfrac{(1 - x_b - y_b)Y_b}{y_b}}$$

$$Yw = Y_r + Y_g + Y_b$$

where xw, yw and Y indicate a measured x-axis coordinate, y-axis coordinate and luminance value of the ambient light, respectively,

$(x_r, y_r)$, $(x_g, y_g)$, and $(x_b, y_b)$ indicate the measured x-axis coordinate_ and y-axis coordinate of the internal light source for R,G, and B, respectively,

$Y_r$, $Y_g$, and $Y_b$ indicates the luminance value to be calculated for R,G, and B-, respectively.

2. System as claimed in claim 1, wherein the second control unit is further adapted for, after calculating the luminance values, adjusting a driving frequency of the backlight unit, controlling the light-source sensor to measure the luminance values, and comparing the calculated luminance value with the measured luminance values.

3. System as claimed in claim 2, wherein the second control unit is adapted for adjusting the driving frequency of the backlight unit until the luminance values measured by the light-source sensor approximates to the calculated luminance values.

4. System as claimed in claim 1, wherein the control unit controls the plurality of LEDs to be partially operated.

5. A method for adjusting an internal light source of an image display device, the internal light source comprising a plurality of separately controllable LEDs, the method comprising:

   receiving an x-axis coordinate, an y-axis coordinate and a luminance value of ambient light (S600), using the linear xyY color space coordinate system;
   receiving an x-axis and y-axis coordinate for R, G, B of the internal light source of the image display device (S610), using the linear xyY color space coordinate system;
   calculating luminance values for R, G, B based on the received x and y-axis coordinates and the luminance value of the ambient light and the received x and y-axis coordinates for R, G, B of the internal light source (S620); and
   transmitting the calculated luminance values for R, G, B to the image display device (S700) in order to adjust the internal light source of the image display device based on the calculated luminance values (S710), such that the ambient light is reflected in an adjustment of the internal light source;
   wherein calculating the luminance values comprises calculating the luminance values using the following equation:

$$xw = \frac{\dfrac{x_r Y_r}{y_r} + \dfrac{x_g Y_g}{y_g} + \dfrac{x_b Y_b}{y_b}}{\dfrac{x_r Y_r}{y_r} + \dfrac{x_g Y_g}{y_g} + \dfrac{x_b Y_b}{y_b} + Y_r + Y_g + Y_b + \dfrac{(1 - x_r - y_r)Y_r}{y_r} + \dfrac{(1 - x_g - y_g)Y_g}{y_g} + \dfrac{(1 - x_b - y_b)Y_b}{y_b}}$$

$$yw = \frac{Yw}{\dfrac{x_r Y_r}{y_r} + \dfrac{x_g Y_g}{y_g} + \dfrac{x_b Y_b}{y_b} + Y_r + Y_g + Y_b + \dfrac{(1 - x_r - y_r)Y_r}{y_r} + \dfrac{(1 - x_g - y_g)Y_g}{y_g} + \dfrac{(1 - x_b - y_b)Y_b}{y_b}}$$

$$Yw = Y_r + Y_g + Y_b$$

where xw, yw and Y indicate a measured x-axis coordinate, y-axis coordinate, and luminance value of the ambient light, respectively,

$(x_r, y_r)$, $(x_g, y_g)$, and $(x_b, y_b)$ indicate the measured x-axis coordinate and y-axis coordinate of the internal light source for R,G, and B, respectively,

$Y_r$, $Y_g$, and $Y_b$ indicate the luminance value to be calculated for R, G, and B, respectively.

6. The method as claimed in claim 5, wherein receiving the x-axis and y-axis coordinates of the ambient light comprises receiving the x-axis and y-axis coordinates of the ambient light from an optical measuring device which measures the luminance of the ambient light (S800).

7. A method as claimed in claim 5 further comprising:

adjusting the internal light source of the image display device based on the calculated luminance values.

8. Method as claimed in claim 7, wherein adjusting the internal light source comprises adjusting the internal light source so that the luminance values of the internal light source are approximately equal to the calculated luminance values.

9. The method as claimed in claim 8, wherein adjusting the internal light source comprises adjusting a driving frequency of a backlight unit comprising the internal light source (S712), measuring the luminance values of the internal light source (S713) after adjusting the driving frequency of the backlight unit, comparing the measured luminance values with the calculated luminance values (S714), and re-adjusting the driving frequency of the backlight unit until the measured luminance values of the internal light source are approximately equal to the calculated luminance values (S712).

10. The method as claimed in claim 7, wherein the x-axis and y-axis coordinates of ambient light are measured at a user terminal.

11. The method as claimed in claim 7, wherein the x-axis and y-axis coordinates of the internal light source are measured at the image display device and wherein the measured coordinates of the internal light source are transmitted to the user terminal.

12. The method as claimed in claim 7, calculating the luminance values comprises calculating the luminance values at a user terminal and transmitting the luminance values to the image display device.

**Patentansprüche**

1. Bildanzeigesystem, umfassend:

eine Hintergrundbeleuchtungseinheit (410; 520), die eine interne Lichtquelle (412; 522) mit einer Mehrzahl separat steuer- bzw. regelbarer LEDs und einen Lichtquellensensor (414; 524) umfasst, der angepasst ist, um eine x-Achsenkoordinate und eine y-Achsenkoordinate für R, G, B der internen Lichtquelle zu messen, unter Verwendung des linearen xyY-Farbraum-Koordinatensystems;

eine optische Messeinheit (200; 510), die angepasst ist, um eine x-Achsen- und eine y-Achsenkoordinate und einen Luminanzwert von Umgebungslicht zu messen, unter Verwendung des linearen xyY-Farbraum-Koordinatensystems;

eine erste Steuer- bzw. Regeleinheit (330; 530), die angepasst ist, um Luminanzwerte für R, G, B auf Grundlage der x- und y-Achsenkoordinaten für R, G, B der internen Lichtquelle, der x- und y-Achsenkoordinaten des Umgebungslichts und der Luminanz des Umgebungslichts zu berechnen; und

eine zweite Steuer- bzw. Regeleinheit (430; 530), die angepasst ist, um die interne Lichtquelle auf Grundlage der berechneten Luminanzwerte für R, G, B zu regulieren; so dass sich das Umgebungslicht in einer Regulierung der internen Lichtquelle widerspiegelt;

wobei die erste Steuer- bzw. Regeleinheit angepasst ist, um die Luminanzwerte mittels der folgenden Gleichungen zu berechnen:

$$xw = \frac{\dfrac{x_r Y_r}{y_r} + \dfrac{x_g Y_g}{y_g} + \dfrac{x_b Y_b}{y_b}}{\dfrac{x_r Y_r}{y_r} + \dfrac{x_g Y_g}{y_g} + \dfrac{x_b Y_b}{y_b} + Y_r + Y_g + Y_b + \dfrac{(1-x_r-y_r)Y_r}{y_r} + \dfrac{(1-x_g-y_g)Y_g}{y_g} + \dfrac{(1-x_b-y_b)Y_b}{y_b}}$$

$$yw = \frac{Y_w}{\dfrac{x_r Y_r}{y_r} + \dfrac{x_g Y_g}{y_g} + \dfrac{x_b Y_b}{y_b} + Y_r + Y_g + Y_b + \dfrac{(1-x_r-y_r)Y_r}{y_r} + \dfrac{(1-x_g-y_g)Y_g}{y_g} + \dfrac{(1-x_b-y_b)Y_b}{y_b}}$$

$$Y_w = Y_r + Y_g + Y_b$$

worin xw, yw und Y jeweils eine gemessene x-Achsenkoordinate, eine gemessene y-Achsenkoordinate und einen gemessenen Luminanzwert des Umgebungslichts angeben,

$(x_r, y_r)$, $(x_g, y_g)$ und $(x_b, y_b)$ die gemessene x-Achsenkoordinate und y-Achsenkoordinate der internen Lichtquelle für jeweils R, G und B angeben,

$Y_r$, Yg und $Y_b$ den Luminanzwert angeben, der für jeweils R, G und B zu berechnen ist.

2. System nach Anspruch 1, wobei die zweite Steuer- bzw. Regeleinheit weiterhin angepasst ist, um, nach Berechnen der Luminanzwerte, eine Antriebsfrequenz der Hintergrundbeleuchtungseinheit zu regulieren, den Lichtquellensensor so zu steuern bzw. zu regeln, dass er die Luminanzwerte misst, und um die berechneten Luminanzwerte mit den gemessenen Luminanzwerten zu vergleichen.

3. System nach Anspruch 2, wobei die zweite Steuer- bzw. Regeleinheit angepasst ist, um die Antriebsfrequenz der Hintergrundbeleuchtungseinheit zu regulieren, bis sich die vom Lichtquellensensor gemessenen Luminanzwerte den berechneten Luminanzwerten nähern.

4. System nach Anspruch 1, wobei die Steuer- bzw. Regeleinheit die Mehrzahl von LEDs so steuert bzw. regelt, dass sie teilweise betrieben werden.

5. Verfahren zur Regulierung einer internen Lichtquelle einer Bildanzeigevorrichtung, wobei die interne Lichtquelle eine Mehrzahl separat steuer- bzw. regelbarer LEDs umfasst, wobei das Verfahren umfasst:

Empfangen einer x-Achsenkoordinate, einer y-Achsenkoordinate und eines Luminanzwerts von Umgebungslicht (S600), unter Verwendung des linearen xyY-Farbraum-Koordinatensystems;

Empfangen einer x-Achsen- und einer y-Achsenkoordinate für R, G, B der internen Lichtquelle der Bildanzeigevorrichtung (S610), unter Verwendung des linearen xyY-Farbraum-Koordinatensystems;

Berechnen von Luminanzwerten für R, G, B auf Grundlage der empfangenen x- und y-Achsenkoordinaten und des Luminanzwerts des Umgebungslichts und der empfangenen x- und y-Achsenkoordinaten für R, G, B der internen Lichtquelle (S620); und

Senden der berechneten Luminanzwerte für R, G, B zur Bildanzeigevorrichtung (S700), um die interne Lichtquelle der Bildanzeigevorrichtung auf Grundlage der berechneten Luminanzwerte zu regulieren (S710), so dass sich das Umgebungslicht in einer Regulierung der internen Lichtquelle widerspiegelt;

wobei das Berechnen der Luminanzwerte das Berechnen der Luminanzwerte mittels der folgenden Gleichung umfasst:

$$xw = \frac{\dfrac{x_r Y_r}{y_r} + \dfrac{x_g Y_g}{y_g} + \dfrac{x_b Y_b}{y_b}}{\dfrac{x_r Y_r}{y_r} + \dfrac{x_g Y_g}{y_g} + \dfrac{x_b Y_b}{y_b} + Y_r + Y_g + Y_b + \dfrac{(1 - x_r - y_r)Y_r}{y_r} + \dfrac{(1 - x_g - y_g)Y_g}{y_g} + \dfrac{(1 - x_b - y_b)Y_b}{y_b}}$$

$$yw = \frac{Yw}{\dfrac{x_r Y_r}{y_r} + \dfrac{x_g Y_g}{y_g} + \dfrac{x_b Y_b}{y_b} + Y_r + Y_g + Y_b + \dfrac{(1 - x_r - y_r)Y_r}{y_r} + \dfrac{(1 - x_g - y_g)Y_g}{y_g} + \dfrac{(1 - x_b - y_b)Y_b}{y_b}}$$

$$Yw = Y_r + Y_g + Y_b$$

worin xw, yw und Y jeweils eine gemessene x-Achsenkoordinate, eine gemessene y-Achsenkoordinate und einen gemessenen Luminanzwert des Umgebungslichts angeben,

$(x_r, y_r)$, $(x_g, y_g)$ und $(x_b, y_b)$ die gemessene x-Achsenkoordinate und y-Achsenkoordinate der internen Lichtquelle für jeweils R, G und B angeben,

$Y_r$, Yg und $Y_b$ den Luminanzwert angeben, der für jeweils R, G und B zu berechnen ist.

6. Verfahren nach Anspruch 5, wobei das Empfangen der x-Achsen- und y-Achsenkoordinaten des Umgebungslichts das Empfangen der x-Achsen- und y-Achsenkoordinaten des Umgebungslichts aus einer optischen Messvorrichtung umfasst, die die Luminanz des Umgebungslichts misst (S800).

7. Verfahren nach Anspruch 5, weiterhin umfassend:

Regulieren der internen Lichtquelle der Bildanzeigevorrichtung auf Grundlage der berechneten Luminanzwerte.

8. Verfahren nach Anspruch 7, wobei das Regulieren der internen Lichtquelle umfasst
Regulieren der internen Lichtquelle so, dass die Luminanzwerte der internen Lichtquelle annähernd gleich den berechneten Luminanzwerten sind.

9. Verfahren nach Anspruch 8, wobei das Regulieren der internen Lichtquelle umfasst
Regulieren einer Antriebsfrequenz einer die interne Lichtquelle umfassenden Hintergrundbeleuchtungseinheit (S712),
Messen der Luminanzwerte der internen Lichtquelle (S713) nach Regulieren der Antriebsfrequenz der Hintergrundbeleuchtungseinheit,

Vergleichen der gemessenen Luminanzwerte mit den berechneten Luminanzwerten (S714), und

erneutes Regulieren der Antriebsfrequenz der Hintergrundbeleuchtungseinheit, bis die gemessenen Luminanzwerte der internen Lichtquelle annähernd gleich den berechneten Luminanzwerten sind (S712).

10. Verfahren nach Anspruch 7, wobei die x-Achsen- und y-Achsenkoordinaten von Umgebungslicht an einem Benutzerendgerät gemessen werden.

11. Verfahren nach Anspruch 7, wobei die x-Achsen- und y-Achsenkoordinaten der internen Lichtquelle an der Bildanzeigevorrichtung gemessen werden und wobei die gemessenen Koordinaten der internen Lichtquelle zum Benutzerendgerät gesendet werden.

12. Verfahren nach Anspruch 7, wobei das Berechnen der Luminanzwerte das Berechnen der Luminanzwerte an einem Benutzerendgerät und das Senden der Luminanzwerte zur Bildanzeigvorrichtung umfasst.

## Revendications

1. Système de visualisation d'image comprenant :

une unité de rétroéclairage (410 ; 520) comprenant une source lumineuse interne (412 ; 522) comportant une pluralité de LED pouvant être commandées séparément et un capteur de source lumineuse (414 ; 524) adapté pour mesurer une coordonnée sur l'axe des x et une coordonnée sur l'axe des y pour R, V, B de la source lumineuse interne, en utilisant le système de coordonnées de couleurs xyY linéaire ;

une unité de mesure optique (200 ; 510) adaptée pour mesurer une coordonnée sur l'axe des x et sur l'axe des y et une valeur de luminance de la lumière ambiante, en utilisant le système de coordonnées de couleurs xyY linéaire ;

une première unité de commande (330 ; 530) adaptée pour calculer les valeurs de luminance pour R, V, B en se fondant sur les coordonnées sur l'axe des x et des y pour R, V, B de la source lumineuse interne, les coordonnées sur l'axe des x et des y de la lumière ambiante et la luminance de la lumière ambiante ; et

une seconde unité de commande (430 ; 530) adaptée pour régler la source lumineuse interne en fonction des valeurs de luminance calculées pour R, V, B ; de manière que la lumière ambiante soit réfléchie lors d'un réglage de la source lumineuse interne ;

dans lequel la première unité de commande est adaptée pour calculer les valeurs de luminance en appliquant les équations suivantes :

$$xw = \cfrac{\dfrac{x_r Y_r}{y_r} + \dfrac{x_g Y_g}{y_g} + \dfrac{x_b Y_b}{y_b}}{\dfrac{x_r Y_r}{y_r} + \dfrac{x_g Y_g}{y_g} + \dfrac{x_b Y_b}{y_b} + Y_r + Y_g + Y_b + \dfrac{(1 - x_r - y_r)Y_r}{y_r} + \dfrac{(1 - x_g - y_g)Y_g}{y_g} + \dfrac{(1 - x_b - y_b)Y_b}{y_b}}$$

$$yw = \cfrac{Yw}{\dfrac{x_r Y_r}{y_r} + \dfrac{x_g Y_g}{y_g} + \dfrac{x_b Y_b}{y_b} + Y_r + Y_g + Y_b + \dfrac{(1 - x_r - y_r)Y_r}{y_r} + \dfrac{(1 - x_g - y_g)Y_g}{y_g} + \dfrac{(1 - x_b - y_b)Y_b}{y_b}}$$

$$Yw = Y_r + Y_g + Y_b$$

dans lesquelles xw, yw et Y désignent une coordonnée sur l'axe des x, une coordonnée sur l'axe des y et une valeur de luminance de la lumière ambiante mesurées, respectivement, $(x_r, y_r)$, $(x_g, y_g)$, et $(x_b, y_b)$ désignent une coordonnée sur l'axe des x et une coordonnée sur l'axe des y de la source lumineuse interne mesurées pour R, V, et B, respectivement, $Y_r$, Yg et $Y_b$ désignent la valeur de luminance devant être calculée pour R, V, et B, respectivement.

2. Système selon la revendication 1, dans lequel la seconde unité est encore adaptée pour, une fois les valeurs de luminance calculées, régler une fréquence d'excitation de l'unité de rétroéclairage, commander le capteur de source lumineuse afin d'obtenir une mesure des valeurs de luminance, et comparer la valeur de luminance calculée aux valeurs de luminance mesurées.

3. Système selon la revendication 2, dans lequel la seconde unité de commande est adaptée pour régler la fréquence d'excitation de l'unité de rétroéclairage jusqu'à ce que les valeurs de luminance mesurées par le capteur de source lumineuse s'approchent des valeurs de luminance calculées.

4. Système selon la revendication 1, dans lequel l'unité de commande effectue la commande de la pluralité de LED afin qu'elles soient partiellement activées.

5. Procédé de réglage d'une source lumineuse interne d'un dispositif de visualisation d'image, la source lumineuse interne comprenant une pluralité de LED pouvant être commandées séparément, le procédé comprenant :

la réception d'une coordonnée sur l'axe des x, une coordonnée sur l'axe des y et une valeur de luminance de la lumière ambiante (S600), en utilisant le système de coordonnées de couleurs xyY linéaire ;
la réception d'une coordonnée sur l'axe des x et sur l'axe des y pour R, V, B de la source lumineuse interne du dispositif de visualisation d'image (S610), en utilisant le système de coordonnées de couleurs xyY linéaire ;
le calcul des valeurs de luminance pour R, V, B en se fondant sur les coordonnées sur l'axe des x et sur l'axe des y reçues, sur la valeur de luminance de la lumière ambiante et sur les coordonnées sur l'axe des x et sur l'axe des y pour R, V, B de la source lumineuse interne (S620) ; et
la transmission des valeurs de luminance calculées pour R, V, B auprès du dispositif de visualisation d'image (S700) pour régler la source lumineuse interne du dispositif de visualisation d'image en fonction des valeurs de luminance calculées (S710), de manière que la lumière ambiante soit réfléchie lors d'un réglage de la source lumineuse interne ;
dans lequel le calcul des valeurs de luminance comprend le calcul des valeurs de luminance en appliquant les équations suivantes :

$$xw = \frac{\frac{x_r Y_r}{y_r} + \frac{x_g Y_g}{y_g} + \frac{x_b Y_b}{y_b}}{\frac{x_r Y_r}{y_r} + \frac{x_g Y_g}{y_g} + \frac{x_b Y_b}{y_b} + Y_r + Y_g + Y_b + \frac{(1 - x_r - y_r)Y_r}{y_r} + \frac{(1 - x_g - y_g)Y_g}{y_g} + \frac{(1 - x_b - y_b)Y_b}{y_b}}$$

$$yw = \frac{Yw}{\frac{x_r Y_r}{y_r} + \frac{x_g Y_g}{y_g} + \frac{x_b Y_b}{y_b} + Y_r + Y_g + Y_b + \frac{(1 - x_r - y_r)Y_r}{y_r} + \frac{(1 - x_g - y_g)Y_g}{y_g} + \frac{(1 - x_b - y_b)Y_b}{y_b}}$$

$$Yw = Y_r + Y_g + Y_b$$

dans lesquelles xw, yw et Y désignent une coordonnée sur l'axe des x, une coordonnée sur l'axe des y et une valeur de luminance de la lumière ambiante mesurées, respectivement, $(x_r, y_r)$ , $(x_g, y_g)$ , et $(x_b, y_b)$ désignent une coordonnée sur l'axe des x et une coordonnée sur l'axe des y de la source lumineuse interne mesurées pour R, V, et B, respectivement, $Y_r$, Yg et $Y_b$ désignent la valeur de luminance à calculer pour R, V, et B, respectivement.

6. Procédé selon la revendication 5, dans lequel la réception des coordonnées sur l'axe des x et sur l'axe des y de la lumière ambiante comprend la réception des coordonnées sur l'axe des x et sur l'axe des y de la lumière ambiante de la part d'un dispositif de mesure optique qui mesure la luminance de la lumière ambiante (S800).

7. Procédé selon la revendication 5, comprenant en outre : le réglage de la source lumineuse interne du dispositif de visualisation d'image en fonction des valeurs de luminance calculées.

8. Procédé selon la revendication 7, dans lequel le réglage de la source lumineuse interne comprend :

le réglage de la source lumineuse interne de manière que les valeurs de luminance de la source lumineuse interne soient à peu près égales aux valeurs de luminance calculées.

9. Procédé selon la revendication 8, dans lequel le réglage de la source lumineuse interne comprend :

le réglage d'une fréquence d'excitation d'une unité de rétroéclairage comprenant la source lumineuse interne (S712),
la mesure des valeurs de luminance de la source lumineuse interne (S713) après le réglage de la fréquence d'excitation de l'unité de rétroéclairage,
la comparaison des valeurs de luminance mesurées aux valeurs de luminance calculées (S714), et
un nouveau réglage de la fréquence d'excitation de l'unité de rétroéclairage jusqu'à ce que les valeurs de luminance de la source lumineuse interne mesurées soient à peu près égales aux valeurs de luminance calculées (S712).

10. Procédé selon la revendication 7, dans lequel les coordonnées sur l'axe des x et sur l'axe des y de la lumière ambiante sont mesurées au niveau d'un terminal utilisateur.

11. Procédé selon la revendication 7, dans lequel les coordonnées sur l'axe des x et sur l'axe des y de la source lumineuse interne sont mesurées au niveau du dispositif de visualisation d'image et dans lequel les coordonnées mesurées de la source lumineuse interne sont transmises au terminal utilisateur.

12. Procédé selon la revendication 7, dans lequel le calcul des valeurs de luminance comprend le calcul des valeurs de luminance au niveau du terminal utilisateur et la transmission des valeurs de luminance au dispositif de visualisation d'image.

# FIG. 1

200 ～ OPTICAL
MEASURING DEVICE

310 ～ FIRST
INTERFACE UNIT

330 ～ FIRST
CONTROL UNIT

320 ～ SECOND
INTERFACE UNIT

300

BACKLIGHT UNIT ～ 410

412 ～ INTERNAL
LIGHT SOURCE | LIGHT-SOURCE
SENSOR ～ 414

SECOND CONTROL UNIT ～ 430

THIRD
INTERFACE UNIT ～ 420

400

# FIG. 2

510 — OPTICAL MEASURING UNIT

530 — THIRD CONTROL UNIT

BACKLIGHT UNIT ~ 520

522 — | INTERNAL LIGHT SOURCE | LIGHT-SOURCE SENSOR | ~524

500

# FIG. 3

START

S600 — INPUT COLOR COORDINATE OF AMBIENT LIGHT

S610 — INPUT COLOR COORDINATE OF INTERNAL LIGHT SOURCE

S620 — CALCULATE LUMINANCE VALUES FROM COLOR COORDINATE

S630 — SEND LUMINANCE VALUES TO IMAGE DISPLAY DEVICE

END

# FIG. 4

START

S700 — INPUT LUMINANCE VALUE
FROM USER TERMINAL

S710 — ADJUST INTERNAL LIGHT SOURCE

END

# FIG. 5

START

S700 — INPUT LUMINANCE VALUE
FROM USER TERMINAL

S711 — MEASURE LUMINANCE OF
INTERNAL LIGHT SOURCE

S712 — ADJUST FREQUENCY
OF BACKLIGHT UNIT

S713 — MEASURE LUMINANCE OF
INTERNAL LIGHT SOURCE

S714 — DOES
INPUT LUMINANCE
APPROXIMATE TO MEASURED
LUMINANCE? — N

Y

END

# FIG. 6

START

S800 — MEASURE COLOR COORDINATE
OF AMBIENT LIGHT

S810 — MEASURE COLOR COORDINATE
AND LUMINANCE OF
INTERNAL LIGHT SOURCE

S820 — CALCULATE LUMINANCE VALUES
FROM COLOR COORDINATES

S830 — ADJUST INTERNAL LIGHT SOURCE

END

# FIG. 7

START

S800 — MEASURE COLOR COORDINATE
OF AMBIENT LIGHT

S810 — MEASURE COLOR COORDINATE
AND LUMINANCE OF
INTERNAL LIGHT SOURCE

S820 — CALCULATE LUMINANCE VALUES
FROM COLOR COORDINATES

S831 — ADJUST FREQUENCY
OF BACKLIGHT UNIT

S832 — MEASURE LUMINANCE OF
INTERNAL LIGHT SOURCE

S833 — DOES
INPUT LUMINANCE
APPROXIMATE TO MEASURED
LUMINANCE?

N

Y

END

**EP 1 930 868 B1**

## REFERENCES CITED IN THE DESCRIPTION

### Patent documents cited in the description

- WO 0237454 A
- US 20060226956 A